# EUROPEAN PATENT SPECIFICATION

(11) **EP 1 677 700 B1**
(45) Date of publication and mention of the grant of the patent: **11.11.2009**
(21) Application number: 04781396.9
(22) Date of filing: 17.08.2004
(51) Int. Cl.: A61C 13/15, A61C 7/14

(54) **METHOD AND APPARATUS FOR BONDING ORTHODONTIC APPLIANCES TO TEETH**
VERFAHREN UND GERÄT ZUR VERBINDUNG VON ORTHODONTISCHEN GERÄTEN MIT DEN ZÄHNEN
PROCEDE ET DISPOSITIF DESTINES A FIXER PAR LIAISON DES APPAREILS ORTHODONDIQUES SUR LES DENTS

(30) Priority: 03.10.2003 US 678841
(43) Date of publication of application: 12.07.2006
(73) Proprietor: 3M Innovative Properties Company, St. Paul MN 55133-3427 (US)
(72) Inventor: CLEARY, James D., Saint Paul, MN 55133-3427 (US); CINADER, David K., Jr., Saint Paul, MN 55133-3427 (US); PUTTLER, Oliver L.,, Saint Paul, MN 55133-3427 (US)
(74) Representative: Vossius & Partner
(86) International application number: PCT/US2004/026691
(87) International publication number: WO 2005/039436

(56) References cited:
- EP-A- 0 678 282
- US-A- 3 949 477
- US-A- 5 316 473
- US-B1- 6 514 075

## Description

This invention relates to an apparatus for attaching orthodontic appliances such as brackets and buccal tubes to the surfaces of a patient's teeth. More particularly, the present invention relates to an apparatus for bonding orthodontic appliances to teeth by use of a photocurable bonding material.

Such an apparatus is for example disclosed in US 3949477.

Orthodontic treatment is directed toward movement of malpositioned teeth toward desired positions and alignment along the dental arches. Orthodontic treatment can greatly enhance the patient's appearance, especially in instances where crooked or misaligned teeth are located near the front of the oral cavity. Orthodontic treatment can also improve the patient's occlusion so that the opposing teeth properly contact each other during mastication.

One type of common orthodontic treatment involves the use of tiny, slotted orthodontic appliances known as brackets that are connected to the patient's anterior, cuspid and bicuspid teeth. An archwire is placed in the slot of each bracket, and forms a track to guide movement of the teeth to orthodontically correct positions. Ends of the archwire are often received in small appliances known as buccal tubes that are connected to the patient's molar teeth.

Many commercially available orthodontic appliances are adapted to be directly bonded to the enamel surface of teeth by means of an orthodontic bonding adhesive. Some adhesives, such as CONCISE brand adhesive (from 3M Unitek) are supplied as two initially separate components. Once the components are mixed in the practitioner's office to form the adhesive, the adhesive begins to cure. However, such two-component adhesives have only a limited "working time" during which the practitioner can transfer the adhesive to the base of the appliance, place the appliance on the tooth and then shift the appliance as necessary to a particular desired position before the adhesive begins to harden.

Other adhesives, such as TRANSBOND brand adhesive (also from 3M Unitek) are known as photocurable adhesives or light-curable adhesives and begin to harden once a source of light is directed toward the adhesive. Light-curable adhesives are preferred by many practitioners because the length of the "working time" can be selected as needed in accordance with the task at hand. In use, the appliance can be carefully placed on the patient's tooth and then shifted as needed until the practitioner is satisfied with the position of the appliance. After the appliance is properly positioned, the practitioner activates the light in order to securely fix the appliance in place.

In general, orthodontic appliances that are adapted to be adhesively bonded to the patient's teeth are connected to the teeth by either one of two techniques: a direct bonding technique or an indirect bonding technique. In the direct bonding technique, the appliance (to which a quantity of adhesive has been applied) is grasped with a pair of tweezers or other hand instrument and placed by the practitioner on the surface of the tooth in an appropriate desired location. Next, the appliance is shifted along the surface of the tooth as needed until the practitioner is satisfied with its position. Once the appliance is in its precise, intended location, the appliance is pressed firmly onto the tooth to seat the appliance in the adhesive. Excess adhesive in areas adjacent the base of the appliance is removed, and the adhesive is then allowed to cure and bond the appliance to the tooth.

In the indirect bonding technique, the practitioner often uses a placement device that has a configuration that matches the shape of at least part of the patient's dental arch. One type of placement device is often called a "transfer tray" and typically has a cavity or channel for simultaneously receiving a number of teeth. A set of appliances such as brackets or buccal tubes are releasably connected to the tray at certain, predetermined locations.

Other types of placement devices used in indirect bonding techniques are often referred to as "jigs" and resemble a framework that contacts one or more teeth at certain locations. For example, a jig constructed for use in bonding a single appliance to a single tooth may have an arm that extends over and contacts an incisal section of the tooth. An appliance such as a bracket or buccal tube is releasably connected to the jig at a certain, predetermined location relative to the tooth.

In the indirect bonding technique, the base of each appliance receives a quantity of orthodontic adhesive. The placement device is then positioned over the patient's teeth and remains in place until such time as the adhesive hardens. Next, the placement device is detached from the teeth as well as from the appliances, with the result that all of the appliances previously connected to the device are now bonded to the respective teeth at their intended, predetermined locations.

A variety of light emitting devices are available for curing photocurable materials used in orthodontic bonding techniques. One type of light curing device or apparatus has a housing with a "pistol-grip" configuration. The housing includes a lamp (such as a halogen lamp) that is located in a central section of the housing above the handle. A light guide, often made of a bundle of optical fibers that are fused together, extends outwardly from the housing and is somewhat slender in order to fit in the oral cavity. In some curing apparatus, the light guide can be swiveled about its longitudinal axis in order to facilitate the direction of travel of the emitted light. Examples of pistol-grip dental curing apparatus are described in U.S. Patent Nos. 4,888,489 and 5,147,204.

Recently, there has been increased interest in the use of solid state light emitters to replace the lamps conventionally used in dental curing apparatus. Solid state light emitters, such as light emitting diodes (also known as "LEDs") and laser diodes, are typically smaller than the halogen lamps mentioned above. Consequently, the overall size of the apparatus can be decreased. Moreover, solid state light emitters also emit far less heat than halogen lamps and as a result the need for a fan can often be avoided.

Examples of dental light curing apparatus having solid state light emitters are described, for example, in U.S. Patent Nos. 6,419,483, 5,711,665, 5,634,711, 5,487,662 and PCT Application No. WO 99/22667. However, in the field of orthodontia, there is a continuing interest in improving the techniques of bonding appliances to teeth. For example, there is a desire to reduce the overall amount of time needed for the bonding procedure so that the time spent by the practitioner as well as by the patient can be reduced. In addition, there is a need for improved indirect bonding techniques that can be used with a variety of placement devices known today.

The present invention is related to an apparatus for reducing the time needed in an orthodontic bonding procedure in instances where a photocurable material such as a bonding adhesive is used. The invention involves a light curing apparatus that enables a number of orthodontic appliances to be bonded to the teeth simultaneously. The apparatus includes an array of solid state light emitters that are received in the oral cavity during the procedure and are strategically positioned to direct light toward a number of appliances at the same time.

In more detail, a method of bonding orthodontic appliances to a patient's teeth is also disclosed. The method comprises:
providing orthodontic appliances for at least two teeth of the patient's dental arch;
providing a quantity of photocurable material for each appliance;
placing each orthodontic appliance on a corresponding tooth of the patient's dental arch such that the photocurable material is between the appliance and the tooth;
providing an array of solid state light emitters arranged in locations generally corresponding to locations of orthodontic appliances on the dental arch;
placing the array of light emitters in the oral cavity adjacent the orthodontic appliances; and
activating the light emitters in order to initiate the hardening of the photocurable material and bond the appliances to the teeth.

Another aspect of the present invention is directed to apparatus for bonding orthodontic appliances to a patient's teeth. The apparatus comprises an orthodontic placement device having a configuration matching at least a portion of the patient's dental arch, and at least one orthodontic appliance detachably connected to the placement device. Each appliance has a base for bonding the appliance to a tooth. The apparatus also includes at least one solid state light emitter coupled to the placement device and arranged to direct light toward the base of at least one appliance for hardening the photocurable material located between the base and the tooth.

Further details of the invention are defined in the features of the claims.
Fig. 1 is a plan view of an exemplary apparatus for bonding orthodontic appliances to a patient's teeth according to one embodiment of the present invention;
Fig. 2 is a side cross-sectional view of the apparatus shown in Fig. 1, taken along lines 2-2 of Fig. 1;
Fig. 3 is an enlarged side cross-sectional view of a portion of the apparatus shown in Fig. 2; and
Fig. 4 is an enlarged cross-sectional view of an apparatus for bonding orthodontic appliances to a patient's teeth according to another embodiment of the invention.

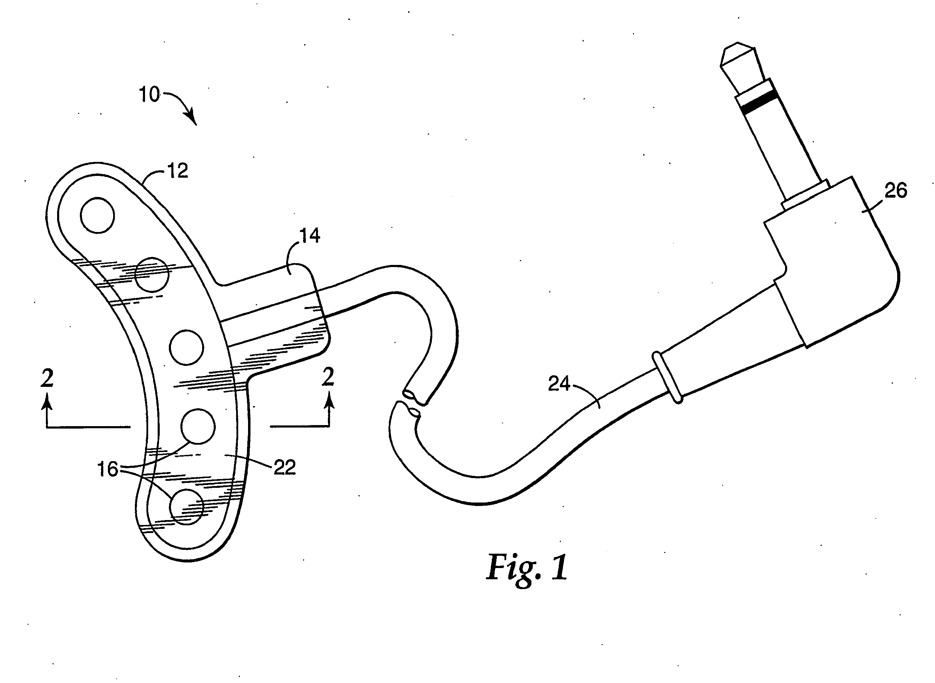

An apparatus for bonding orthodontic appliances to a patient's teeth according to one embodiment of the invention is designated broadly by the numeral 10 in Figs. 1-3. The apparatus 10 includes an elongated substrate 12 that preferably has a curved, central longitudinal axis that approximately matches the shape of a patient's dental arch. Optionally, the substrate 12 includes a protrusion 14 that extends in a direction away from the longitudinal axis in a location near the center of the substrate 12.

In the embodiment shown in Figs. 1-3, the substrate 12 has an overall length that is approximately equal to the length of a quadrant of a typical patient's dental arches. However, other sizes and configurations are also possible. For example, the substrate could have an overall, generally U-shaped configuration in plan view suitable for extending along an entire dental arch, from the last erupted molar on the patient's left side to the last erupted molar on the patient's right side. Alternatively, the substrate 12 could have an overall shape suitable for extending between certain teeth along the dental arch such as the patient's upper left second bicuspid to the patient's upper right second bicuspid.

An array of solid state light emitters 16 extends along the length of the substrate 12. In Fig. 1, the light emitters 16 are arranged in spaced-apart locations in alignment along the central, curved longitudinal axis of the substrate 12. In the embodiment shown, five light emitters 16 are provided, corresponding to five teeth of a quadrant of a dental arch (i.e., the central incisor, lateral incisor, cuspid, first bicuspid and second bicuspid tooth, and not including the molars).

Alternatively, the array of light emitters 16 may include a cluster of light emitters corresponding to each tooth. For example, five clusters of three, four or five light emitters may be arranged in circular or polygonal patterns in locations generally corresponding to the five locations of the light emitters 16 depicted in Fig. 1. Alternatively, the array of light emitters may comprise a single row or a plurality of rows of light emitters, where the rows generally follow along or are parallel to the curved central axis of the substrate 12.

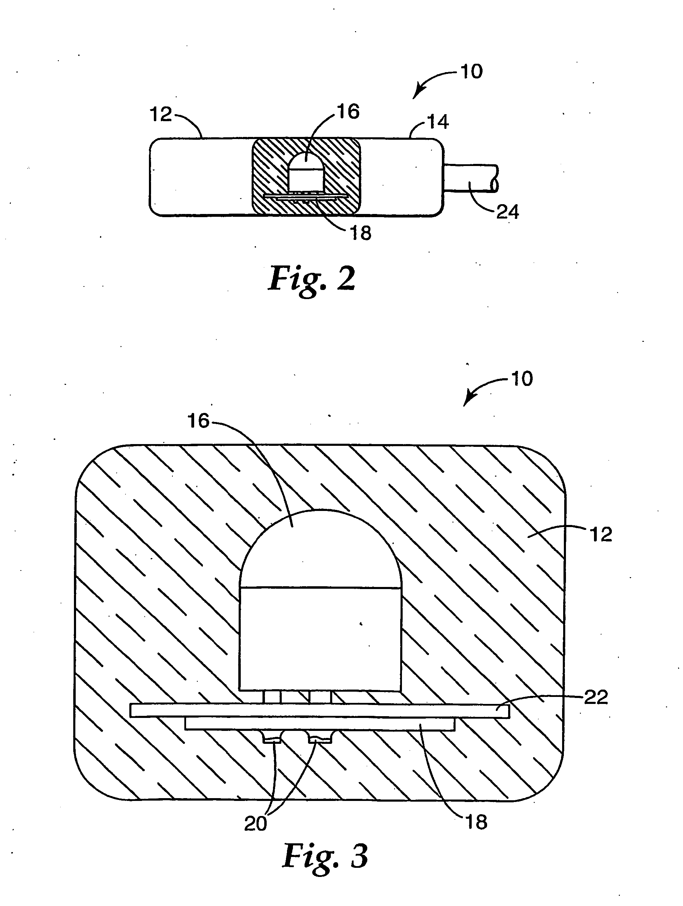

The light emitters 16 are shown in more detail in Fig. 3. In the illustrated embodiment, each light emitter 16 is mounted on a circuit board 18 that preferably is flexible. A pair of leads 20 from each light emitter 16 is electrically connected to conductive strips or paths of the circuit board 18. Preferably, all of the light emitters 16 are connected in parallel, although other wiring arrangements are also possible.

As an option, a sheet of reflective material 22 is located between the circuit board 18 and the light emitters 16. The reflective material 22 facilitates a uniform distribution of light and functions to direct light in a generally upward direction viewing Fig. 3. The reflective material 22 is spaced away from electrical contact with the leads 20.

Suitable reflective materials 22 include metallic foils and multilayer optical films, including layers of at least one strain-induced birefringent material. Examples of useful optical films are set out in U.S. Patent Nos. 6,419,483. The reflective material 22 may also comprise a material deposited on the circuit board 18 such as barium sulfate or magnesium oxide.

As used herein, the phrase "solid state light emitter" means any device that converts electrical energy into electromagnetic radiation through the recombination of holes and electrons. Examples of solid state light emitters include semi-conductor light emitting diodes, semi-conductor laser diodes, polymer light emitting diodes and electroluminescent devices (i.e., devices that convert electrical energy to light by a solid phosphor subjected to an alternating electrical field).

Preferably, the light has wavelengths in the visible range (i.e., from about 400 nanometers to about 700 nanometers). The wavelength of the emitted radiation is selected to provide optimal photoinitiation of the photocurable material used in the orthodontic procedure, and accordingly is selected by reference to the type of photoinitiator employed in the photocurable material. An example of a suitable light emitter is the 470 nm InGaN Super Blue brand PC board LED no. L121CB1K-3.5Vf from Ledtronics, Incorporated of Torrance, California.

Light emitting diode assemblies include semi-conductor materials that are doped to result in the emission of light within a desired, preferably narrow, band of wavelengths that match the wavelength band of light that is absorbed by the photoinitiator. Light emitting diode assemblies are typically assembled or packaged with a relatively bulky focusing lens. Optionally, the light emitters 16 lack such lenses and include only the relatively small semi-conductor chips so that the overall size of the apparatus 10 is relatively compact.

Preferably, the light emitters 16, the circuit board 18 and the reflective material 22 (if provided) are completely encapsulated in the substrate 12. The substrate 12, or at least that portion of the substrate 12 that is next to the light emitters 16, is made of a light-transmissive material that is suitable for use in the oral cavity. An example of a suitable material is optically clear silicone material such as NuSil brand MED-6010 silicone material, from NuSil Technology of Carpinteria, California. Alternatively, an optically clear epoxy material may be used.

A power cord 24 extends through the protrusion 14 and has two conductors that are electrically connected to the conductive paths of the circuit board 18 for supplying power to the leads 20 of the light emitters 16. The power cord 24 is flexible and is shown in broken view to indicate the provision of a longer length than illustrated. Preferably, the power cord 24 is also completely covered by a clear silicone material such as the material mentioned above. An end of the power cord 24 remote from the protrusion 14 is electrically connected to a plug 26 that is adapted for releasable connection to a power supply.

The power supply is not shown in the drawings, but may include a battery pack having rechargeable or non-rechargeable batteries. As another alternative, the power supply may comprise a filtered, rectified direct voltage power source. The power supply preferably includes an on-off switch as well as a signaling device that provides a visible or audible signal, such as a beeper. The signaling device is connected to a timing circuit in order to inform the practitioner that the light emitters 16 have been activated for a certain amount of time. For example, the timing circuit could be constructed to activate the signaling device every 10 or 20 seconds, or such other length of time as may be suitable for estimating the extent of hardening of photocurable material.

In instances where the power supply comprises a battery pack, it is possible for the power supply to be housed in a container that is attached, for example, to the practitioner's belt. In instances where the power supply comprises a continuous connection to line voltage, the power supply may be contained in a housing that is placed on a tray, countertop or other location near the patient's chair. The on-off switch for the power supply may be located on the housing or, in instances where the power supply is continuously connected to line voltage, may comprise a foot-operated switch.

In use, the practitioner first places orthodontic appliances on the patient's teeth, along with a quantity of photocurable material between the base of each appliance and the tooth surface. Preferably, the photocurable material is an orthodontic light-curable adhesive having properties sufficient to essentially prevent the appliance from inadvertently shifting along the surface of the tooth before the adhesive has hardened. Examples of suitable photocurable adhesives include TRANSBOND LR brand adhesive, TRANSBOND PLUS brand adhesive, TRANSBOND XT brand adhesive and APC II brand adhesive, all from 3M Unitek Corporation of Monrovia, California. Optionally, the appliances are adhesive precoated appliances such as APC brand appliances from 3M Unitek.

Next, the practitioner moves the apparatus 10 in order to place the substrate 12 in the oral cavity. The substrate 12 is moved to a position between the dental arches such that the light emitters 16 are facing the orthodontic appliances to be bonded. In this orientation, the plane of the substrate 12 (i.e., the horizontal plane of the substrate 12 viewing Fig. 2) is parallel to the occlusal plane of the patient.

The practitioner then instructs the patient to close his or her jaws so that the substrate 12 is lightly clamped between the occlusal tips of the adjacent upper and lower teeth. In this orientation, the light emitters 16 are located along the occlusal tips of the teeth as well as along the occlusal side of the appliances to be bonded. Depending on the selected construction of the apparatus 10, the light emitters 16 may be located directly over the appliances in an occlusal direction, or may be offset from such a position in a mesial or distal direction so that the light emitters 16 are positioned in an occlusal direction from a location midway in the spaces between adjacent appliances.

Next, the power supply is activated in order to energize the light emitters 16. Preferably, all of the light emitters 16 are energized simultaneously in order to initiate the curing reaction for the photocurable material associated with all of the adjacent appliances at once. For example, if the apparatus 10 is positioned so that each of the light emitters 16 is located in an occlusal direction from an adjacent appliance, activation of the light emitters 16 will initiate the curing reaction for the photocurable material associated with all of the five appliances at once. The light emitters 16 direct light simultaneously along parallel, spaced-apart paths that extend generally in a gingival direction. Optionally, and depending on the characteristics of any focusing lens and/or reflective material, light is also directed at the same time along paths that extend at an angle to a gingival direction.

The light emitters 16 are energized by the power supply for a certain length of time according to the preferences of the practitioner. For example, the practitioner may prefer to energize the light emitters 16 for a relatively short amount of time, in order to "tack" bond the appliances to the respective teeth without fully hardening the photocurable material. In this technique, it is relatively easy to clean up the photocurable material that has extruded near the base of the appliance. Once the cleaning procedure has been completed, the apparatus 10 can be used for a second time to increase the strength of the bond between the appliances and the teeth. As another alternative, however, the practitioner may elect to energize the light emitters 16 for a sufficient amount of time to substantially cure the photocurable material in a single energization.

Advantageously, the solid state light emitters 16 create relatively little heat when energized. As such, a number of light emitters (such as light emitters 16) can be utilized and energized simultaneously without providing undue heat in the oral cavity. Moreover, the expense of optical fibers, light guides and the like can be avoided.

Additionally, the apparatus 10 is an advantage because the time needed for the bonding procedures is significantly reduced. Furthermore, since the substrate 12 is preferably positioned between the occlusal tips of the upper and lower teeth, there is less likelihood that one or more of the appliances will be bumped or dislodged during the bonding procedure and shift away from its intended location. Such a method also represents less discomfort for the patient since less time is spent in the dental chair.

As an alternative, the substrate 12 may have a curved shape adapted to fit against the labial side of patient's dental arch or the lingual side of the patient's dental arch, and the light emitters arranged to direct light along a path generally parallel to a buccolabial-lingual reference axis. For example, if lingual appliances are used for orthodontic treatment, the substrate may have a concave wall adapted to fit against the labial surfaces of the teeth. In that instance, the light emitters are positioned to direct light in a lingual direction through the teeth and toward adhesive that is located between the base of the lingual appliances and the lingual tooth surfaces. Alternatively, if labial appliances are employed, the substrate may have a convex wall adapted to fit against the lingual surfaces of the teeth, so that light can be directed in a labial direction through the teeth and toward the adhesive. In either instance, the substrate may have a length sufficient to extend along the entire length of the dental arch, or have a length sufficient to extend along only a portion of the dental arch (such as a quadrant of an arch, or between the left and right second bicuspid teeth of an arch, or along only one or two teeth).

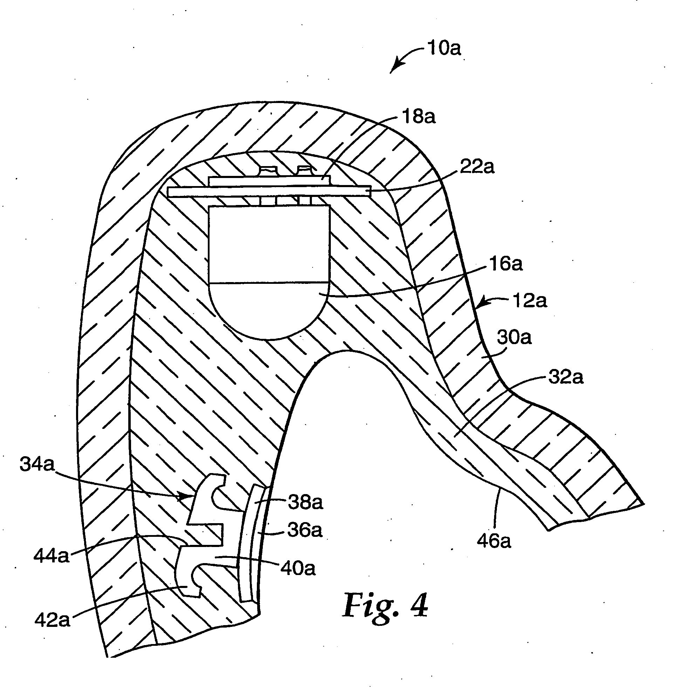

An apparatus 10a according to another embodiment of the invention is illustrated in sectional view in Fig. 4. In this embodiment, the apparatus 10a includes a substrate 12a that comprises an orthodontic appliance placement device. The placement device is useful for placing orthodontic appliances on teeth during an indirect bonding procedure.

In more detail, the substrate 12a comprises a shell 30a and a quantity of matrix material 32a. A suitable material for the shell 30a is a sheet of polycarbonate such as Macrolon brand material from Bayer or Lexan brand polycarbonate from General Electric having a thickness of about 0.06 in. Other materials, such as polyethyleneteraphthalate glycol ("PETG") may also be used.

The matrix material 32a has a Shore A hardness that is less than the Shore A hardness of the shell 30a. An example of a suitable material for the matrix material 32a is a silicone material such as "RTV 615" silicone material from General Electric. Alternatively, the matrix material 32a may comprise a dental impression material or a bite registration material. Suitable materials include polyvinylsiloxane impression material, such as Memosil 2 brand vinyl polysiloxane material from Heraeus Kulzer Inc. or Peppermint Snap brand clear bite registration material from Discus Dental. The matrix material 32a is preferably optically clear and transmits light without substantial absorption.

Additional details regarding the shell 30a and the matrix 32a, as well as methods for constructing the same, are set out in applicant's copending U.S. Patent Application entitled "APPARATUS FOR INDIRECT BONDING OF ORTHODONTIC APPLIANCES AND METHOD OF MAKING THE SAME", Serial No. 10/678286, which was filed on October, 3, 2003.

Preferably, the substrate 12a including the shell 30a and the matrix material 32a extend along a number of teeth of a patient's dental arch, such as a quadrant of an arch or an entire arch, optionally excluding the molar teeth. An appliance, such as the appliance 34a, is provided for each tooth and is releasably connected to the matrix material 32a. In Fig. 4, the exemplary orthodontic appliance 34a is a bracket, although other appliances such as buccal tubes, buttons and various other attachments are also possible.

The appliance 34a includes a base 36a that is connected to a base flange 38a. The appliance 34a also has a body 40a that extends outwardly from the flange 38a. A pair of tiewings 42a is connected to the body 40a, and an archwire slot 44a extends through a space in the tiewings 42a. The base flange 38a, the body 40a and the tiewings 42a may be made of any one of a number of materials suitable for use in the oral cavity and having sufficient strength to withstand the correction forces applied during treatment. Suitable materials include, for example, metallic materials (such as stainless steel), ceramic materials (such as monocrystalline or polycrystalline alumina) and plastic materials (such as fiber-reinforced polycarbonate). Optionally, the base flange 38a, the body 40a and the tiewings 42a are integrally made as a unitary component.

Optionally, the base 36a of the appliance 34a is made of a material different than the material comprising the base flange 38a, and has a configuration that matches the configuration of a portion of a patient's tooth structure. More particularly, the base 36a has a concave contour that is a replica of the convex contour of the portion of the patient's tooth that represents the ultimate desired location of the appliance 34a on the tooth. The concave contour of the base 36a is optionally a compound concave contour (i.e., curved in two directions along two mutually perpendicular reference axes).

The apparatus 10a also includes an array of light emitters 16a that is connected to a circuit board 18a. Optionally, a section of reflective material 22a is placed between the light emitters 16a and the circuit board 18a. The light emitters 16a, circuit board 18a and reflective material 22a are essentially identical to the light emitters 16, circuit board 18 and reflective material 22 describe above, and as such a detailed description of those components shall not be repeated.

Although not shown, the electrical conductive paths of the circuit board 18a are connected to a cord that extends through the matrix material 32a and the shell 30a, preferably in a location near the front of the patient's oral cavity when the apparatus 10a is placed over the patient's teeth. The power cord, in turn, is connected to a power supply such as one of the power supplies described above.

The apparatus 10a includes a channel 46a that is located in the matrix material 32a. The channel 46a preferably has a shape that precisely matches the configuration of a portion of a patient's dental arch. When the patient's teeth are received in the channel 46a, the appliances including the appliance 34a are located adjacent intended mounting positions on the patient's tooth surfaces.

In use of the apparatus 10a, the patient's teeth are first prepared as needed for the selected bonding procedure. The steps of the bonding procedure are determined in part by their particular bonding material selected by the practitioner. For example, when using certain photocurable bonding materials, the patient's teeth to receive the appliances are isolated using cheek retractors, tongue guards, cotton rolls, dry angles and/or other articles as needed. The teeth are then thoroughly dried using pressurized air from an air syringe. Etching solution (such as TRANSBOND XT brand etching gel from 3M Unitek) is then dabbed onto the teeth in the general area that is to be covered by the appliances, taking care to prevent the etching solution from flowing into interproximal contacts or engaging the skin or gingiva.

After the etching solution has remained on the selected tooth surfaces for a period of time (such as 30 seconds), the solution is rinsed away from the teeth with a stream of water for 15 seconds. The patient's teeth are then dried by the application of pressurized air from an air syringe (for example, for a period of time of 30 seconds) and excess water is removed by suction. Care should also be undertaken to ensure that the saliva does not come into contact with the etched enamel surfaces. Cotton rolls and other absorbent devices are replaced as needed, again making sure that saliva does not contact the etched enamel. Air from the air syringe may then be applied to the teeth again to help ensure that the teeth are thoroughly dried.

A bonding composition is applied to the base 36a. Suitable bonding compositions are described in the pending U.S. Patent Application entitled "APPARATUS FOR INDIRECT BONDING OF ORTHODONTIC APPLIANCE AND METHOD OF MAKING THE SAME" identified above.

The substrate 12a is then positioned over the corresponding teeth and seated, optionally with a swinging, hinge-type motion. Since the shape of the channel 46a matches the shape of the underlying teeth, the appliances (including the appliance 34a) are simultaneously seated against the underlying teeth at known, previously selected locations. The light emitters 16a are then energized in order to cure the photocurable bonding material located between the base 36a of the appliances and the patient's teeth. As the light emitters 16a are energized, light from the light emitters 16a travels through the clear matrix material 32a and to the photocurable material. Preferably, finger pressure is applied to the occlusal, labial and buccal surfaces of the shell 30a until such time as the photocurable material has sufficiently hardened.

Once the photocurable material has hardened, the shell 30a is carefully removed from the patient's dental arch. Preferably, the shell 30a is first separated from the matrix material 32a, which remains in place over the dental arch along with the appliances. Next, the matrix material 32a is detached from the appliances. Optionally, a hand instrument such as a scaler may be used to help hold each appliance against the surface of the respective tooth of the patient as the matrix material 32a is peeled away from the appliances. However, in instances where the matrix material 32a is relatively soft or otherwise readily releases from the appliances, the use of a scaler to help avoid fracturing the fresh adhesive bond is optional.

The photocurable material is not illustrated in Fig. 4, but preferably extends over the entire base 36a. Examples of suitable photocurable materials include those materials described above. Optionally, the photocurable material is applied to the base 36a by the manufacturer and placed in a container that is constructed of a material that provides a substantial barrier to the transmission of actinic radiation. The container is also constructed to protect the photocurable material from contaminates such as dust, moisture and the like.

Examples of optional suitable containers for the apparatus 10a, as well as suitable methods and materials for constructing the base 36a and other aspects of the elements shown in Fig. 4 are described in the patent application entitled "APPARATUS FOR INDIRECT BONDING OF ORTHODONTIC APPLIANCE AND METHOD OF MAKING THE SAME" identified above.

A variety of other constructions are also possible and will be apparent to those skilled in the art. For example, the embodiment shown in Fig. 4 could be adapted for only one or two teeth of a dental arch. As another example, the embodiment depicted in Figs. 1-3 could be used with an optically clear indirect bonding tray that lacked internal light emitters.

## Claims

1. Apparatus (10) for bonding orthodontic appliances to a patient's teeth comprising:
an orthodontic placement device having a configuration matching at least a portion of the patient's dental arch;
at least one orthodontic appliance (34a) detachably connected to the placement device, each appliance (34a) having a base (38a) for bonding the appliance to a tooth; and
at least one solid state light emitter (16) coupled to the placement device and arranged to direct light toward the base (38a) of at least one appliance (34a) for hardening photocurable material located between the base and the tooth.

2. Apparatus for bonding orthodontic appliances to a patient's teeth according to claim 1 wherein the placement device includes a matrix material that transmits light.

3. Apparatus for bonding orthodontic appliances to a patient's teeth according to claim 1 wherein the placement device is a tray having an overall generally U-shaped configuration in longitudinal cross-section.

4. Apparatus for bonding orthodontic appliances to a patient's teeth according to claim 1 and including a quantity of photocurable material (36a) disposed on each orthodontic appliance.

5. Apparatus for bonding orthodontic appliances to a patient's teeth according to claim 1 wherein the placement device is a tray, and wherein the light emitters (16) are arranged along the bottom of the tray in order to be located along occlusal tips of the teeth when the tray is placed in the oral cavity.

6. Apparatus for bonding orthodontic appliances to a patient's teeth according to claim 1 wherein the apparatus includes a substrate (12), and wherein the light emitters (16) are mounted on a substrate (12).

7. Apparatus for bonding orthodontic appliances to a patient's teeth according to claim 1 and including a reflective material (22).

8. Apparatus for bonding orthodontic appliances to a patient's teeth according to claim 7 wherein the reflective material (22) is connected to the substrate (12) and is located between the substrate and the light emitters (16).

## Patentansprüche

1. Vorrichtung (10) zum Verbinden orthodontischer Geräte mit den Zähnen eines Patienten, wobei die Vorrichtung Folgendes aufweist:
eine orthodontische Platzierungseinrichtung, die eine Konfiguration hat, die mit wenigstens einem Abschnitt des Zahnbogens des Patienten zusammenpasst,
wenigstens ein orthodontisches Gerät (34a), das lösbar mit der Platzierungseinrichtung verbunden ist, wobei jedes Gerät (34a) eine Basis (38a) zum Verbinden des Geräts mit einem Zahn hat, und
wenigstens einen Festkörper-Lichtemitter (16), der an die Platzierungseinrichtung gekoppelt und dafür angeordnet ist, Licht zu der Basis (38a) wenigstens eines Geräts (34a) zu leiten, um durch Licht härtbares Material, das zwischen der Basis und dem Zahn angeordnet ist, zu härten.

2. Vorrichtung zum Verbinden orthodontischer Geräte mit den Zähnen eines Patienten nach Anspruch 1, wobei die Platzierungseinrichtung ein Matrixmaterial aufweist, das Licht durchlässt.

3. Vorrichtung zum Verbinden orthodontischer Geräte mit den Zähnen eines Patienten nach Anspruch 1, wobei die Platzierungseinrichtung eine Schale ist, die eine insgesamt im Allgemeinen im Längsquerschnitt U-förmige Konfiguration hat.

4. Vorrichtung zum Verbinden orthodontischer Geräte mit den Zähnen eines Patienten nach Anspruch 1 und die eine Menge an durch Licht härtbarem Material (36a) aufweist, das an jedem orthodontischen Gerät angeordnet ist.

5. Vorrichtung zum Verbinden orthodontischer Geräte mit den Zähnen eines Patienten nach Anspruch 1, wobei die Platzierungseinrichtung eine Schale ist und wobei die Lichtemitter (16) längs des Bodens der Schale angeordnet sind, um längs der okklusalen Spitzen der Zähne angeordnet zu sein, wenn die Schale in der Mundhöhle platziert ist.

6. Vorrichtung zum Verbinden orthodontischer Geräte mit den Zähnen eines Patienten nach Anspruch 1, wobei die Vorrichtung ein Substrat (12) aufweist und wobei die Lichtemitter (16) an einem Substrat (12) angebracht sind.

7. Vorrichtung zum Verbinden orthodontischer Geräte mit den Zähnen eines Patienten nach Anspruch 1 und die ein reflektierendes Material (22) aufweist.

8. Vorrichtung zum Verbinden orthodontischer Geräte mit den Zähnen eines Patienten nach Anspruch 7, wobei das reflektierende Material (22) mit dem Substrat (12) verbunden ist und zwischen dem Substrat und den Lichtemittern (16) angeordnet ist.

## Revendications

1. Dispositif (10) destiné à fixer par liaison des appareils orthodontiques sur les dents d'un patient, comprenant :
un dispositif de mise en place orthodontique dont la configuration correspond au moins à une partie de l'arcade dentaire du patient ;
au moins un appareil orthodontique (34a) connecté de façon amovible au dispositif de mise en place, chaque appareil (34a) comportant une base (38a) pour fixer par liaison l'appareil à une dent ; et
au moins un émetteur de lumière à semiconducteurs (16) couplé au dispositif de mise en place et disposé pour diriger la lumière vers la base (38a) d'au moins un appareil (34a) pour durcir le matériau photodurcissable positionné entre la base et la dent.

2. Dispositif destiné à fixer par liaison des appareils orthodontiques sur les dents d'un patient selon la revendication 1, dans lequel le dispositif de mise en place comprend un matériau matriciel qui transmet la lumière.

3. Dispositif destiné à fixer par liaison des appareils orthodontiques sur les dents d'un patient selon la revendication 1, dans lequel le dispositif de mise en place est un plateau ayant une configuration globale généralement en forme de U en section transversale longitudinale.

4. Dispositif destiné à fixer par liaison des appareils orthodontiques sur les dents d'un patient selon la revendication 1 et comprenant une certaine quantité de matériau photodurcissable (36a) disposée sur chaque appareil orthodontique.

5. Dispositif destiné à fixer par liaison des appareils orthodontiques sur les dents d'un patient selon la revendication 1, dans lequel le dispositif de mise en place est un plateau, et dans lequel les émetteurs de lumière (16) sont disposés le long du fond du plateau afin d'être positionnés le long des sommets des cuspides des dents quand le plateau est placé dans la cavité buccale.

6. Dispositif destiné à fixer par liaison des appareils orthodontiques sur les dents d'un patient selon la revendication 1, dans lequel le dispositif comprend un substrat (12), et dans lequel les émetteurs de lumière (16) sont montés sur un substrat (12).

7. Dispositif destiné à fixer par liaison des appareils orthodontiques sur les dents d'un patient selon la revendication 1 et comprenant un matériau réfléchissant (22).

8. Dispositif destiné à fixer par liaison des appareils orthodontiques sur les dents d'un patient selon la revendication 7, dans lequel le matériau réfléchissant (22) est connecté au substrat (12) et est positionné entre le substrat et les émetteurs de lumière (16).
